# EUROPÄISCHE PATENTSCHRIFT

(11) **EP 2 299 156 B1**
(45) Veröffentlichungstag und Bekanntmachung des Hinweises auf die Patenterteilung: **30.10.2013**
(21) Anmeldenummer: 10176605.3
(22) Anmeldetag: 14.09.2010
(51) Int. Cl.: F16K 31/04, F16K 3/08

(54) **Rotorscheibe, Rotorscheibenventil und Ventileinrichtung**
Rotor blade, rotor blade valve and valve device
Disque rotorique, vanne papillon de rotor et dispositif de vanne

(30) Priorität: 18.09.2009 DE 102009047914
(43) Veröffentlichungstag der Anmeldung: 23.03.2011
(73) Patentinhaber: E.G.O. Elektro-Gerätebau GmbH, 75038 Oberderdingen (DE)
(72) Erfinder: Friedrichs, Jörn, 75015 Bretten (DE); Rechentin, Jean Marc, 76133 Karlsruhe (DE); Rickert, Jochen, 75438 Knittlingen (DE)
(74) Vertreter: Patentanwälte Ruff, Wilhelm, Beier, Dauster & Partner

(56) Entgegenhaltungen:
- EP-A1- 0 050 550
- EP-A1- 1 167 898
- DE-A1- 19 807 503
- DE-U1- 20 111 656
- JP-A- 62 037 614
- JP-A- 2003 185 036
- US-A- 4 438 781
- US-A1- 2007 012 310
- US-B1- 6 370 709

## Beschreibung

Die Erfindung betrifft eine Ventileinrichtung für elektronisch gesteuerte Gasgeräte nach dem Oberbegriff des Anspruchs 1.

In elektronisch gesteuerten Gasgeräten mit mehreren Gasbrennern wie Gaskochfeldern ist aus Sicherheitsgründen für jeden Gasbrenner ein separates Absperrventil erforderlich. Des Weiteren ist für jeden Gasbrenner ein Mittel zur Steuerung des Gasdurchflusses über einen Regelbereich von einer Minimallast bis zu einer Nennlast eines Brenners vorzusehen. Gaskochfelder weisen in der Regel Brenner unterschiedlicher Nennleistungen auf und können grundsätzlich mit verschiedenen Gasarten betrieben werden. Durch die unterschiedlichen Brenneigenschaften der Gasarten bestehen hohe Anforderungen hinsichtlich Präzision und Reproduzierbarkeit an die Steuerung des Gasdurchflusses, insbesondere für die Einstellung eines minimalen Gasdurchflusses.

Die Steuerung des Gasdurchflusses eines Brenners erfolgt mittels eines Gasventils. Aus dem Stand der Technik sind unterschiedliche Ausführungsformen von Gasventilen bekannt.

Aus der US 4,862,917 ist ein mechanisch gesteuertes Rotorventil mit Bypass bekannt mit einem ersten statisch gelagerten Ventilelement mit mindestens einer Durchgangsöffnung in Gasflussrichtung und einem zweiten drehbar gelagerten Ventilelement, im Folgenden als Rotor bezeichnet, ebenfalls mit einer Durchgangsöffnung in Gasflussrichtung. Der Gasdurchfluss ist durch den Überdeckungsgrad der Durchgangsöffnungen beider Ventilelemente oberhalb eines minimalen Gasdurchflusses einstellbar. Der minimale Gasdurchfluss ist durch eine Bypasskanalgeometrie bestimmt. Der Rotor ist ein Hohlkegelkörper mit einem Gasdurchflusskanal als Bypasskanal. Nachteilig an dieser Ausbildung eines Ventils ist der Bauraumbedarf bedingt durch die Ausbildung des Rotors als Hohlkegelkörper sowie der feinmechanische Fertigungsaufwand zur Herstellung des Bypasskanals.

Nachteilig an mechanisch gesteuerten Gasventilen ist die fehlende Präzision hinsichtlich der Einstellung des Gasdurchflusses zur Steuerung der Brennerleistung sowie eingeschränkte Steuerfunktionen. Eine präzise und reproduzierbare Einstellung des Gasdurchflusses ist nach dem Stand der Technik mit elektronisch gesteuerten Gasventilen möglich. Ferner ermöglichen diese vielfältige Steuerfunktionen.

Aus der EP 1 645 787 A1 ist ein elektronisch gesteuertes Axialgasventil mit Bypasskanal und einem Schrittmotor als Aktuator zur präzisen Steuerung des Gasdurchflusses bekannt. Nachteilig an dieser Konstruktion ist der Bauraumbedarf bedingt durch die axiale Funktionsweise des Ventils sowie der feinmechanische Fertigungsaufwand zur Herstellung des Bypasskanals.

Aus der JP 2003254534 A ist ein Gasdurchflussregelventil bekannt, dass zur Steuerung eines präzisen Gasdurchflusses statt eines Bypasskanals eine Sensorik aufweist, insbesondere zur Steuerung des minimalen Gasdurchflusses. Durch die Sensorik wird der Nachteil des feinmechanischen Fertigungsaufwands kompensiert. Allerdings sind an dieser Ausführungsform der technische Aufwand sowie die hohen Kosten für die Sensorik nachteilig.

Die WO 2005/088194 A1 offenbart ein elektronisch gesteuertes Gasventil für ein Gaskochfeld mit einem Schrittmotor als Aktuator und einem integrierten Absperrventil. Dabei ist das Absperrventil ein Magnetventil und jede Ventileinheit weist einen separaten Gaseingang zur Gasversorgung und einen separaten Gasausgang zum Anschluss an einen Gasbrenner auf. Nachteilig an dieser Konstruktion ist der Bauraumbedarf für die Gasleitungen und die Gasrohre im Gaskochfeld bei der Anordnung mehrerer Ventileinheiten darin.

Aus der DE 698 20 936 T2 geht hervor, dass vor allem in Fluidhandhabungssystemen und anderen Fluidventilsystemen Ventile mit einem Rotor eingesetzt werden, wobei typischerweise ein Elektromotor den Rotor antreibt. Aus dem Stand der Technik sind Rotorventile mit einem als Scheibe ausgebildeten Rotor bekannt, wobei die Rotorscheibe aus Kunststoff oder Teflon ist. Nachteilig bei Rotorscheiben aus Kunststoff oder Teflon ist der Aufwand zur Herstellung solcher Rotorscheiben, da dafür spezielle Verfahren erforderlich sind.

Dokument US 2007/0012310 offenbart eine Ventileinrichtung.

### Aufgabe und Lösung

Der Erfindung liegt die Aufgabe zu Grunde, eine eingangs genannte Ventileinrichtung mit einem Rotorscheibenventil für ein elektronisch gesteuertes Gasgerät, vorzugsweise für ein Gaskochfeld, zu schaffen, mit denen Probleme des Standes der Technik unter anderem hinsichtlich des Bauraumbedarfs und des Fertigungsaufwands beseitigt werden können und die Anforderungen an ein elektronisch gesteuertes Gasgerät für den Einsatz verschiedener Gasarten und Brenner unterschiedlicher Nennleistungen und das Vorhandensein eines erforderlichen Absperrventils in einer Ventileinrichtung bzw. Ventileinheit erfüllt werden können.

Gelöst wird diese Aufgabe durch eine Ventileinrichtung mit den Merkmalen des Anspruchs 1. Vorteilhafte und bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht. Manche der nachfolgenden, jedoch nicht erschöpfend aufgezählten Merkmale und Eigenschaften treffen sowohl auf eine Rotorscheibe, auf ein Rotorscheibenventil mit einer solchen Rotorscheibe als auch auf eine Ventileinrichtung mit einem solchen Rotorscheibenventil zu. Sie werden teilweise nur einmal beschrieben, gelten jedoch unabhängig voneinander sowohl für die Rotorscheibe, das Rotorscheibenventil als auch für die Ventileinrichtung. Weiterhin ist die Reihenfolge der aufgelisteten Merkmale nicht bindend, sondern kann vielmehr entsprechend einer optimierten Rotorscheibe, eines optimierten Rotorscheibenventils bzw. einer optimierten Ventileinrichtung geändert werden.

Es ist eine Rotorscheibe zur Verwendung in einem Rotorscheibenventil zur Einstellung eines definierten Gasdurchflusses an einem Ventilausgang vorgesehen, wobei der Begriff Gasdurchfluss sich in dieser Patentanmeldung auf einen Durchfluss jeglicher Medien erstreckt.

In einer ersten grundsätzlichen Ausgestaltung ist die Rotorscheibe für eine drehbare Lagerung um eine Drehachse senkrecht zur Scheibenfläche auf einer Achse bzw. einer Antriebswelle ausgebildet und weist eine oder mehrere Öffnungen für den Gasdurchfluss auf. Des Weiteren ist ein Rand der Rotorscheibe zumindest teilweise als Zahnkranz ausgebildet. Mittels des Zahnkranzes ist die Rotorscheibe, bei Verwendung in einem Rotorscheibenventil mit einem Aktuator, von dem Aktuator mittels eines Ritzels mit einem wählbaren, vorteilhaft von 1:1 abweichenden, Übersetzungsverhältnis antreibbar.

In einer zweiten grundsätzlichen Ausgestaltung ist die Rotorscheibe ein Stanzteil aus dünnem Blech. Als Stanzteil wird im Folgenden ein Teil bezeichnet, dass zumindest teilweise durch Stanzen gefertigt wird. Vorzugsweise wird die gesamte Rotorscheibe durch Stanzen gefertigt. Mittels des Stanzverfahrens ist eine große Vielfalt an Rotorscheibengeometrien möglich, insbesondere Öffnungen, eine Ausnehmung in der Mitte der Rotorscheibe zur Anordnung auf der Achse bzw. Antriebswelle oder ein Zahnkranz an einem Rand der Rotorscheibe wie er vorstehend zum Antrieb der Rotorscheibe mittels des Ritzels beschrieben worden ist. Diese Rotorscheiben sind einfach, kostengünstig und in hoher Stückzahl herstellbar. Wegen des deutlich geringeren Fertigungsaufwands gegenüber beispielsweise der Herstellung einer Kunststoffscheibe gleicher Geometrie ist daher die Ausbildung der Rotorscheibe als Stanzteil aus dünnem Blech vorteilhaft.

In einer besonders bevorzugten Ausführung werden die beiden vorgenannten grundsätzlichen Ausgestaltungen kombiniert.

In einer alternativen Ausführung kann auf die zumindest teilweise Ausbildung des Randes der Rotorscheibe als Zahnkranz verzichtet werden.

In einer bevorzugten Ausgestaltung ist die Dicke der Rotorscheibe gering und beträgt bevorzugt 0,1 mm bis 0,6 mm, damit die erforderlichen filigranen Geometrien der Rotorscheibe mittels des Stanzverfahrens in entsprechender Qualität hergestellt werden können.

In einer Weiterbildung weist die Rotorscheibe neben den Öffnungen auch mindestens einen Bereich ohne Öffnungen auf. So ist eine Geschlossenstellung des Rotorscheibenventils bei Verwendung einer solchen Rotorscheibe möglich.

In einer weiteren Ausgestaltung kann die Rotorscheibe eine konzentrisch angeordnete Scheibennabe zur Lagerung auf der Achse aufweisen.

Gegenstand ist des Weiteren ein Rotorscheibenventil mit einer Rotorscheibe entsprechend der vorgenannten Ausgestaltungsmöglichkeiten, wobei in einer ersten grundsätzlichen Ausgestaltung ein Rotorscheibenventil eine Rotorscheibe aufweist, bei der der Rand zumindest teilweise als Zahnkranz ausgebildet ist. Die Rotorscheibe ist auf einer Achse gelagert, bevorzugt mittels einer Nabe, und wird mittels eines Ritzels angetrieben, welches auf einer Antriebswelle zur Einstellung eines definierten Gasdurchflusses des Rotorscheibenventils gelagert ist. Durch diese Ausgestaltungsform kann platzsparend ein Antrieb bzw. ein Getriebe im Rotorscheibenventil realisiert werden für eine sehr präzise und reproduzierbare Einstellung des Gasdurchflusses.

In einer zweiten grundsätzlichen Ausgestaltung des Rotorscheibenventils ist die Rotorscheibe auf einer Antriebswelle zur Einstellung eines definierten Gasdurchflusses des Rotorscheibenventils gelagert, vorzugsweise mittels einer Nabe, und mit der Antriebswelle so verbunden, dass eine Winkelposition bzw. Drehposition der Rotorscheibe einer Winkelposition der Antriebswelle entspricht. Diese Ausführungsform ist vorteilhaft, wenn ein Übersetzungsverhältnis von 1:1 zwischen der Antriebswelle und der Winkelposition der Rotorscheibe ausreichend ist, da der Fertigungsaufwand für die Ausbildung des Zahnkranzes entfallen kann.

In einer Weiterbildung weist das Rotorscheibenventil mindestens ein Positionierungselement und eine derart gestaltete Rotorscheibe auf, dass die Rotorscheibe bei entsprechender Anordnung im Rotorscheibenventil am Positionierungselement mindestens eine definierte Winkelposition mittels Drehanschlag, bevorzugt eine Endposition, einnimmt. Dabei ist die definierte Winkelposition durch das Positionierungselement mechanisch bestimmt, wobei vorteilhaft der definierte Drehanschlag durch eine spezielle Außenkontur der Rotorscheibe in Zusammenwirkung mit einem Stift als Positionierungselement gebildet ist.

In einer vorteilhaften Ausführung des Rotorscheibenventils überlappen die Öffnungen der Rotorscheibe in Abhängigkeit von ihrer Drehposition und Geometrie eine Ausgangsöffnung des Rotorscheibenventils mit einer Überdeckung von 0 bis 100%. So ist für jede Rotorscheibenwinkelposition entweder ein definierter Strömungsquerschnitt und damit ein entsprechender Gasdurchfluss oder die Geschlossenstellung einstellbar.

Das Vorsehen mindestens einer definierten Position, vorzugsweise als mechanischer Anschlag bzw. Drehanschlag, kann vorteilhaft in Zusammenwirkung einer entsprechenden Rotorscheibengeometrie mit einem Ausgangsöffnungsquerschnitt zur präzisen und reproduzierbaren Einstellung eines maximalen Gasdurchflusses genutzt werden, wenn die Rotorscheibe so gestaltet ist, dass sich durch den Überdeckungsgrad von Rotorscheibe zu Ausgangsöffnung in dieser definierten Position ein effektiver Strömungsquerschnitt so ausbildet, dass sich beispielsweise der maximale Gasdurchfluss für eine maximale Brennerleistung eines angeschlossenen Brenners einstellt. Eine definierte Position kann auch vorteilhaft für die Geschlossenstellung genutzt werden.

In einer Weiterbildung der Erfindung ist in einem Kontaktbereich zwischen Rotorscheibe und einem an die Ausgangsöffnung des Rotorscheibenventils angrenzenden Ausgangsbereich bzw. um diesen herum ein Dichtelement angeordnet. Vorzugsweise ist es eine Ringdichtung, wobei diese insbesondere im Ausgangsbereich angeordnet ist. Die Rotorscheibe hat somit zwei Funktionen. Zum einen ist sie ein Element zur Steuerung des Gasdurchflusses durch Zusammenwirken ihrer Öffnungen bzw. ihres Bereichs ohne Öffnungen mit mindestens einer Ausgangsöffnung. Zum anderen erfüllt die Rotorscheibe eine Absperrfunktion, wobei sie eine bewegbare Dichtfläche bildet.

Zur Verbesserung der Dichtwirkung kann die Rotorscheibe im Rotorscheibenventil vorteilhaft mittels einer definierten Vorspannkraft, die vorzugsweise mittels eines Federelementes erzeugt wird, gegen einen an die Ausgangsöffnung angrenzenden bzw. diese umgebenden Bereich gedrückt werden. Als Federelemente können insbesondere Schraubenfedern verwendet werden.

Besonders vorteilhaft ist die Verwendung von Rotorscheibenventilen in den genannten Ausführungen in Ventileinrichtungen für elektronisch gesteuerte Gasgeräte, insbesondere in Gaskochfeldern.

Eine Ventileinrichtung für elektronisch gesteuerte Gasgeräte mit mindestens zwei Gasbrennern weist mindestens zwei Ventilports auf. Die Anzahl der Ventilports entspricht dabei der Anzahl der Gasbrenner, da die Gaszufuhr jedes Gasbrenners mittels eines zugehörigen Ventilports gesteuert wird. Dabei weist ein Ventilport ein Absperrventil, ein Gasventil zur Steuerung des Gasdurchflusses und einen Gasausgang zum Anschluss eines Gasbrenners auf.

Erfindungsgemäß weist eine solche Ventileinrichtung eine gemeinsame Gaszuleitung für die Ventilports zur Gasversorgung auf, wobei die Ventilports im weiteren Verlauf des Gasflusses mittels einer im Ventileinrichtungskörper angeordneten Gasverteilleitung angeschlossen sind. Des Weiteren weist jeder Ventilport zur Steuerung des Gasdurchflusses und damit zur Steuerung der Brennerleistung der Ventileinrichtung ein Rotorscheibenventil mit einer drehbar gelagerten Rotorscheibe und einem Aktuator als Antrieb auf. Durch die gemeinsame Gaszuleitung und die im weiteren Verlauf des Gasflusses angeordnete Gasverteilleitung im Ventileinrichtungskörper ist eine kompakte und bauraumsparende Anordnung der Ventilports möglich.

In einer vorteilhaften Ausgestaltung der Ventileinrichtung weist sie mindestens ein Rotorscheibenventil in einer der vorgenannten Ausführungen auf.

Des Weiteren ist es zur präzisen Steuerung des Gasdurchflusses vorteilhaft, wenn der Aktuator zum Antrieb des Rotorscheibenventils ein Schrittmotor ist.

Die Abtriebswelle des Aktuators kann die Antriebswelle des Rotorscheibenventils sein. Alternativ kann die Antriebswelle des Rotorscheibenventils über ein Getriebe mit der Abtriebswelle des Aktuators verbunden sein. Durch einen Schrittmotor als Aktuator und/oder die Verwendung eines Getriebes kann eine hohe Auflösung bei der Einstellung der Winkelposition der Rotorscheibe und damit des Gasdurchflusses erreicht werden. Somit ist eine feine Abstufung der Leistungsstufen eines Brenners möglich, unter Umständen sogar fast eine stufenlose Einstellung.

In einer bevorzugten Ausgestaltung der Erfindung weist die elektronische Ansteuerung des Aktuators für den Antrieb des Rotorscheibenventils eine Endlagenerkennung auf. Mittels der Endlagenerkennung kann insbesondere das Erreichen einer Endposition des Rotorscheibenventils erkannt werden, so dass der Aktuator unverzüglich abgeschaltet werden kann, um Geräuschbildung und mechanische Belastungen des Rotorscheibenventils zu vermeiden.

In einer weiter bevorzugten Ausgestaltung der Erfindung ist mindestens ein Absperrventil einer Ventileinrichtung als Magnetventil ausgebildet.

In einer bevorzugten Ausführung der Erfindung ist der Ventileinrichtungskörper einteilig und besonders bevorzugt aus Aluminium.

In einer anderen Ausführung kann die Ventileinrichtung einen mehrteiligen Ventileinrichtungskörper aufweisen und aus mehreren Einzelmodulen zusammengesetzt sein. Dabei weist jedes Einzelmodul einen Teil des Ventileinrichtungskörpers mit einem Teil der Gasverteilleitung und einen Ventilport auf.

Eine besonders kompakte und bauraumsparende Ausgestaltung der Ventileinrichtung ergibt sich, wenn der Antrieb des Absperrventils und der Aktuator des Rotorscheibenventils an gegenüberliegenden Seiten des Ventileinrichtungskörpers angeordnet werden und die Gasausgänge oberhalb eines der Ventilantriebe angeordnet werden, vorzugsweise oberhalb des Aktuators zum Antrieb des Absperrventils.

In weiterer Ausgestaltung der Erfindung bildet eines der beiden Enden der Gasverteilleitung einen gemeinsamen Gaseingang der Ventileinrichtung. Am anderen Ende der Gasverteilleitung ist ein Verschluss oder ein Anschlusselement, in bevorzugter Ausgestaltung eine weiterführende Gasleitung, vorgesehen.

In einer weiter bevorzugten Ausgestaltung der Erfindung ist an einem Gaseingang der Ventileinrichtung ein Hauptabsperrventil und/oder ein Filterelement vorgesehen.

Des Weiteren kann in einem oder mehreren Ventilports der Ventileinrichtung mindestens ein Rotorscheibenventil mehr als eine Ausgangsöffnung aufweisen. Dabei weist jede Ausgangsöffnung einen separaten Gasausgang aus der Ventileinrichtung auf, so dass an diesen Ventilports ein sogenannter Zweikreisbrenner angeschlossen werden kann.

### Kurzbeschreibung der Zeichnungen

Ausgestaltungen der Erfindung sind in den Zeichnungen schematisch dargestellt und werden im Folgenden näher erläutert. Die in den einzelnen Figuren gezeigten Ausführungen weisen teilweise Merkmale auf, die nicht in allen gezeigten Ausführungen dargestellt sind bzw. die nicht alle gezeigten Ausgestaltungen aufweisen. In den Zeichnungen zeigen:
- Fig. 1: einen Schnitt durch einen Ventilport mit Rotorscheibenventil mit einer Rotorscheibe mit Zahnkranz,
- Fig. 2: einen Ausschnitt des Rotorscheibenventils in Ansicht II-II,
- Fig. 3: einen Schnitt durch einen Ventilport mit Rotorscheibenventil mit einer auf einer Antriebswelle gelagerten Rotorscheibe ohne Zahnkranz,
- Fig. 4: einen Schnitt durch den Ventilport entsprechend Fig. 3 in vergrößerter Darstellung,
- Fig. 5: die Rotorscheibe ohne Zahnkranz in Draufsicht,
- Fig. 6-8: die Rotorscheibe mit Zahnkranz und Ritzel in verschiedenen Winkelpositionen und damit in verschiedenen Gasdurch- flusseinstellungen,
- Fig. 9: eine Ventileinrichtung mit einteiligem Ventileinrichtungskör- per und vier Ventilports,
- Fig. 10: einen mehrteiligen Ventileinrichtungskörper mit mehreren Ventilports und unter anderem einem Ventilport zum An- schluss eines Zweikreisbrenners und
- Fig.11: eine Rotorscheibe vor zwei Gasausgangsöffnungen für einen Zweikreisbrenner.

### Detaillierte Beschreibung der Ausführungsbeispiele

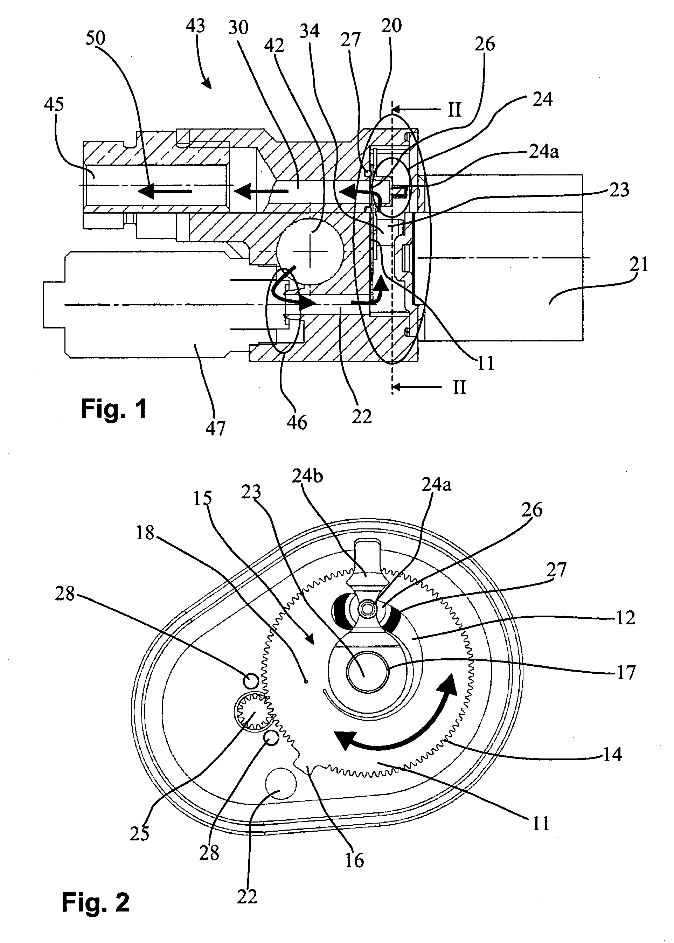

In Fig. 1 ist beispielhaft ein Schnitt durch einen Ventilport 43 mit einem Absperrventil 46, einem Rotorscheibenventil 20 als Gasventil und einem Gasausgang 45 zum Anschluss eines Gasbrenners, der in der Abbildung nicht gezeigt ist, dargestellt. Die Abbildung zeigt ein erstes erfindungsgemäßes Ausführungsbeispiel eines Rotorscheibenventils 20 mit einer Rotorscheibe 11, die gemäß der Draufsicht in Fig. 2 einen zumindest teilweise als Zahnkranz 14 ausgebildeten äußeren Rand aufweist.

Der Antrieb des Absperrventils 46 erfolgt über einen zugehörigen Aktuator 47. Das Absperrventil 46 ist vorzugsweise als Magnetventil ausgebildet.

Die Gasflussrichtung 50 ist mittels der dicken Pfeile schematisch dargestellt. Das Gas wird dem Ventilport 43 über eine Gasverteilleitung 42 zugeführt und von dort durch das geöffnete Absperrventil 46 in einen Zugangskanal 22 zu einem Rotorscheibenventil 20 geleitet. Im weiteren Verlauf des Gasflusses wird das Gas durch eine Rotorscheibenventilkammer 34 durch eine Öffnung 12 in der Rotorscheibe 11 in einen Ventilausgangskanal 30 und von dort zu einem Gasausgang 45 des Ventilports 43 geführt. Die Winkelposition der Rotorscheibe 11 ist mittels eines Aktuators 21 einstellbar, vorteilhaft mittels eines Schrittmotors, der hier die Rotorscheibe 11 über ein Getriebe antreibt.

In Fig. 2 ist dargestellt, wie ein Ritzel 25, das auf einer hier nicht dargestellten Antriebswelle gelagert ist, die Rotorscheibe 11 antreibt. Ein Rand der Rotorscheibe 11 ist größtenteils mit einem Zahnkranz 14 versehen. Die Rotorscheibe 11 kann neben der Öffnung 12 noch weitere Öffnungen aufweisen, beispielsweise ein einzelnes Loch 18 oder mehrere Löcher. Je nach Winkelposition der Rotorscheibe 11 ergibt sich in Abhängigkeit der Öffnung 12 bzw. des Lochs 18 der Rotorscheibe 11 in Zusammenwirken mit einer Ausgangsöffnung 26 ein effektiver Strömungsquerschnitt für den Gasdurchfluss.

Das Gas wird durch den Zugangskanal 22 in die Rotorscheibenventilkammer 34 geleitet und fließt von dort durch die Öffnung 12 in der Rotorscheibe 11 durch die Ausgangsöffnung 26 in den Ventilausgangskanal 30. In einem Bereich um die Ausgangsöffnung 26 ist eine Ringdichtung 27 angeordnet. Zur Verbesserung der Dichtwirkung wird die Rotorscheibe 11 mit einer definierten Vorspannkraft gegen die Ausgangsöffnung 26 gedrückt. Zur Erzeugung der Vorspannkraft wird ein Federelement 24 verwendet, das in dem dargestellten Ausführungsbeispiel einen Rotorscheibenspanner 24b und eine Schraubenfeder 24a aufweist.

Die Rotorscheibe 11 ist mittels einer Scheibennabe 17 auf einer Achse 23 drehbar gelagert. Um mindestens eine definierte Winkelposition der Rotorscheibe 11 einstellen zu können, weist sie eine besonders gestaltete Außenkontur auf, nämlich einen Vorsprung 16 in einem Bereich ihres Randes. In Zusammenwirkung mit Positionierungselementen 28 kann somit ein Drehanschlag realisiert werden. Das Rotorscheibenventil 20 weist zwei Positionierungselemente 28 auf, um in diesem Fall an zwei Positionen eine definierte Winkelposition der Rotorscheibe 11 einstellen zu können. Vorzugsweise sind die Positionierungselemente 28 als Stifte ausgebildet. In einer bevorzugten Ausgestaltung wird der Rand der Rotorscheibe 11 so gestaltet, dass der Vorsprung 16 im Verhältnis zur Öffnung 12 bzw. zum Loch 18 so positioniert wird, dass in einer der Endpositionen die Geschlossenstellung und in der anderen Endposition der maximale Gasdurchfluss eingestellt werden kann.

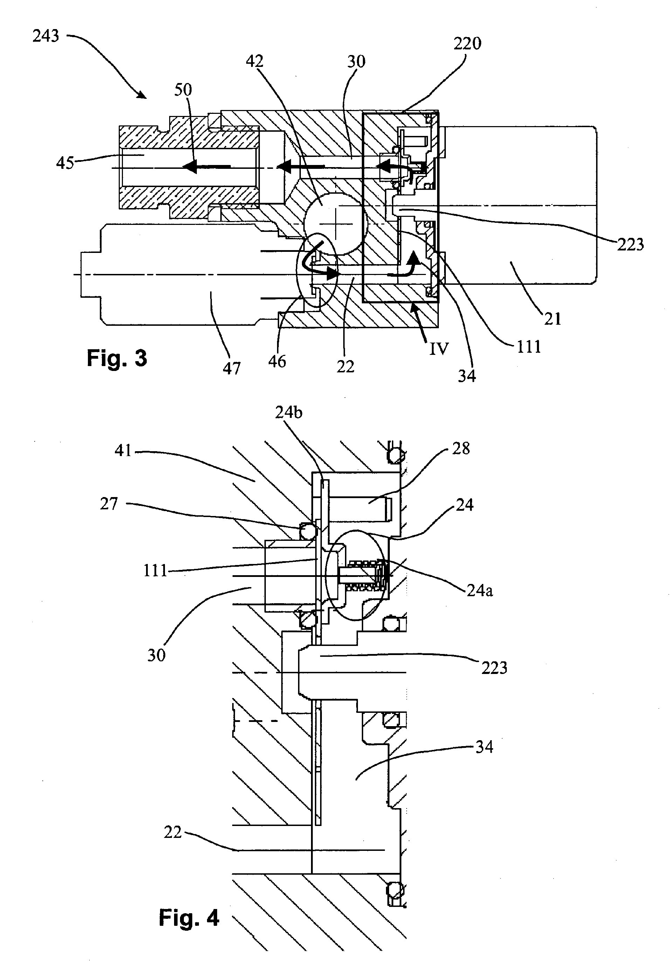

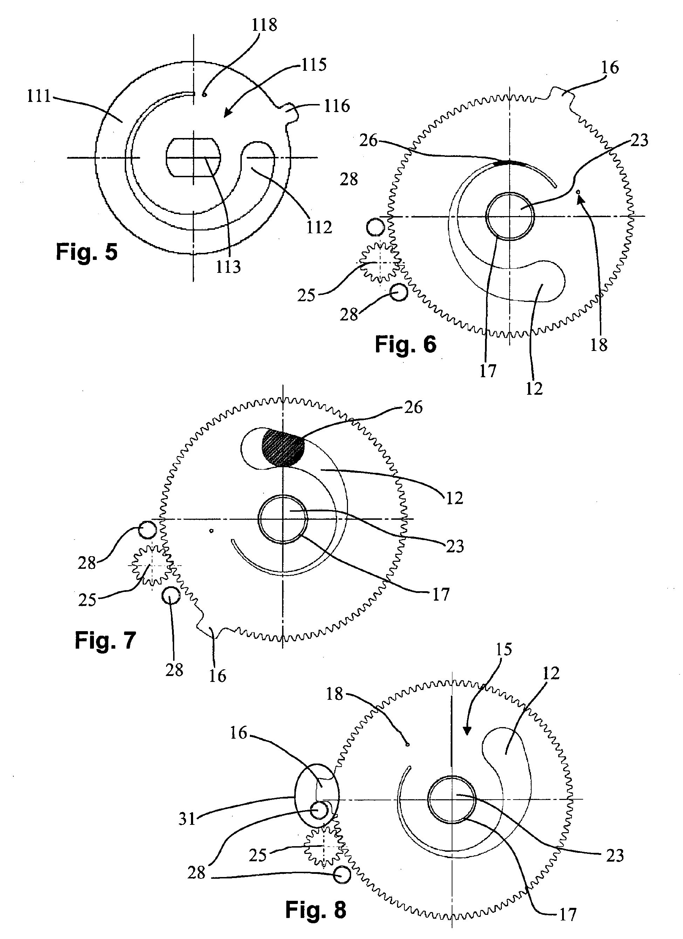

In Fig. 3 ist in einem Schnitt durch einen Ventilport 243 ein weiteres Ausführungsbeispiel eines Rotorscheibenventils 220 dargestellt. Die Abbildung zeigt ein Rotorscheibenventil 220, das eine Rotorscheibe 111 ohne Zahnkranz entsprechend Fig. 5 aufweist. Außerdem ist die Rotorscheibe 111 in diesem Ausführungsbeispiel direkt auf einer Abtriebswelle 223 eines Aktuators 21 gelagert und wird somit direkt und nicht über ein Ritzel angetrieben. Der restliche Aufbau des Ventilports entspricht der Darstellung in Fig. 2.

Fig. 4 zeigt den Ausschnitt IV aus Fig. 3 in einer vergrößerten Darstellung. Dargestellt sind die Abtriebswelle 223, die zugleich die Antriebswelle der Rotorscheibe 111 ist, sowie das Federelement 24 mit dem Rotorscheibenspanner 24b und einer Schraubenfeder 24a. Des Weiteren ist das Positionierungselement 28 erkennbar, sowie das Dichtelement 27, das im Ventileinrichtungskörper 41 angeordnet ist.

In Fig. 5 ist eine Rotorscheibe 111 ohne Zahnkranz am Außenrand dargestellt. Die Rotorscheibe 111 weist analog zur in Fig. 2 gezeigten Rotorscheibe 11 ebenfalls eine Öffnungskontur 112 bzw. ein Loch 118 sowie einen Vorsprung 116 für einen Drehanschlag auf. Ebenfalls analog zur Rotorscheibe 11 weist die Rotorscheibe 111 einen Bereich 115 ohne Öffnungen auf, um auch eine Geschlossenstellung des Rotorscheibenventils 220 zu ermöglichen. Wird in einem Ventilport ein Rotorscheibenventil 220 mit Lagerung der Rotorscheibe 111 direkt auf der Abtriebswelle 223 des Aktuators 21 verwendet, wie in einer beispielhaften Ausführung in Fig. 3 dargestellt, so ist eine Verdrehsicherung gegen Verdrehen der Rotorscheibe 111 auf der Abtriebswelle 223 des Aktuators 21 vorzusehen. Fig. 5 zeigt eine beispielhafte Gestaltung einer solchen Verdrehsicherung als unrunde Ausnehmung 113 in der Rotorscheibe 111.

Das Stanzverfahren bietet den Vorteil, dass auch komplexe Geometrien, inklusive beispielsweise des Zahnkranzes 14, kostengünstig und in großer Stückzahl gefertigt werden können. Aus fertigungstechnischen Gründen beim Stanzen ist es vorteilhaft, wenn die Rotorscheiben 11 bzw. 111 wie in den bisher gezeigten Ausführungsbeispielen eine geringe Dicke aufweisen, vorzugsweise 0,1 mm bis 0,6 mm. Besonders vorteilhaft sind Rotorscheiben aus dünnem Blech. Als vorteilhaft hat sich zudem die Anordnung der Rotorscheibe 11 bzw. 111 im Rotorscheibenventil 20 bzw. 220 mit der durch das Stanzen entstehenden abgerundeten Seite zum Dichtelement 27 hin erwiesen. Wird die Rotorscheibe 11 bzw. 111 auf diese Weise im Rotorscheibenventil 20 bzw. 220 angeordnet, wird die Dichtung 27 nicht durch die Schnittkanten, die beim Stanzen entstehen, beschädigt.

Die Fig. 6 bis 8 zeigen schematisch verschiedene Winkelpositionen und die daraus resultierenden unterschiedlichen beispielhaften Überdeckungsgrade von Öffnung 12 in der Rotorscheibe 11 und Ausgangsöffnung 26. Diese unterschiedlichen Überdeckungsgrade führen zu unterschiedlichen effektiven Strömungsquerschnitten für den Gasdurchfluss und ermöglichen so eine Einstellung einer effektiven Brennerleistung eines hier nicht dargestellten im weiteren Verlauf des Gasflusses angeschlossenen Gasbrenners.

Fig. 6 zeigt eine Einstellung für einen kleinen Gasdurchfluss. Denkbar sind diverse Geometrien der Öffnung 12 sowie auch einzelne Löcher 18, etwa zur verbesserten Einstellung des minimalen Gasdurchflusses.

Fig. 7 zeigt eine Einstellung für einen großen Gasdurchfluss. Dabei befindet sich der Vorsprung 16 kurz vor dem Positionierungselement 28.

Fig. 8 zeigt die Geschlossenstellung. Die Ausgangsöffnung 26 wird vollständig von dem Bereich 15 ohne Öffnungen verdeckt. In diesem Ausführungsbeispiel wird die Geschlossenstellung an einer der Endpositionen 31 erreicht. Der Vorsprung 16 liegt an dem Positionierungselement 28 an und es ergibt sich ein mechanischer Drehanschlag.

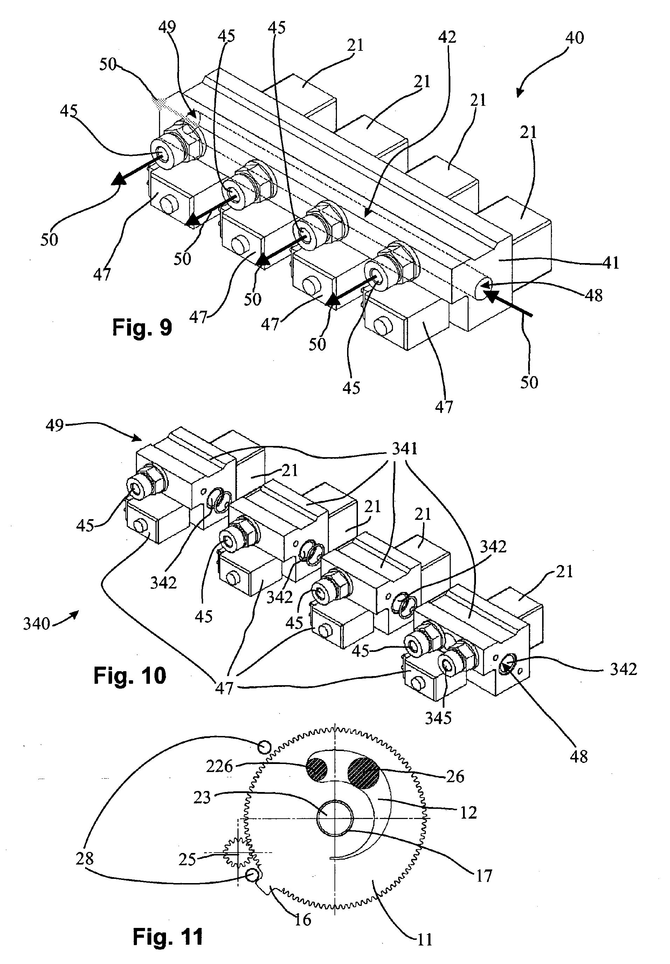

In Fig. 9 ist beispielhaft eine Ventileinrichtung 40 dargestellt. Die Ventileinrichtung 40 weist vier Ventilports auf, wobei jeder Ventilport ein nicht dargestelltes Absperrventil, einen Aktuator 47 für das Absperrventil sowie einen Aktuator 21 zum Antrieb eines in dieser Darstellung nicht erkennbaren Rotorscheibenventils aufweist. Die Ventileinrichtung 40 weist einen einteiligen Ventileinrichtungskörper 41 auf. In einer besonders bevorzugten Ausführung ist dieser Ventileinrichtungskörper 41 aus Aluminium. Eine gemeinsame Gasverteilleitung 42 aller in der Ventileinrichtung 40 angeordneten Ventilports verläuft durch den Ventileinrichtungskörper 41. Beispielhaft ist die Gasflussrichtung 50 dargestellt mit einem Gaseingang 48 und den jeweiligen Gasausgängen 45, an die im weiteren Verlauf hier nicht dargestellte Gasbrenner angeschlossen werden können. Des Weiteren weist die Ventileinrichtung 40 einen zusätzlichen Gasausgang 49 auf, der zum Anschluss einer weiterführenden Gasleitung an ein weiteres Gasgerät, z.B. einen Gasbackofen, genutzt werden kann. Ein Verschließen des Gasausganges 49 mit einem Blindstopfen ist alternativ möglich. Ferner können Gasausgang 49 und Gaseingang 48 auch vertauscht werden. Dies erhöht die Flexibilität hinsichtlich der Einbaumöglichkeiten der Ventileinrichtung, da die Gaszufuhr zur Ventileinrichtung sowohl von links als auch von rechts möglich ist.

Fig. 10 zeigt eine Ventileinrichtung 340, die mehrere Einzelmodule aufweist. Dabei weist jedes Einzelmodul einen Teil des Ventileinrichtungskörpers 341 mit einem Teil der gemeinsamen Gasverteilleitung 342 sowie mindestens einen Ventilport auf. Durch diesen modularen Aufbau ist es möglich, Ventileinrichtungen 340, beispielsweise für ein Gaskochfeld, nur mit so vielen Ventilports vorzusehen, wie Brenner vorgesehen sind. So muss beispielsweise in einem Kochfeld mit drei Brennern keine Ventileinrichtung mit vier Ventilports verwendet werden, sondern die Ventileinrichtung kann aus drei Einzelmodulen aufgebaut werden.

Ganz rechts in Fig. 10 ist ein Ventilport dargestellt, der nicht nur einen einzelnen Gasausgang 45 zum Anschluss eines Gasbrenners aufweist, sondern zusätzlich einen zweiten Gasausgang 345, so dass ein sogenannter Zweikreisbrenner angeschlossen werden kann. Durch den im Vorfeld beschriebenen modularen Aufbau sind so Ventileinrichtungen 340 nur mit Ventilports für Zweikreisbrenner oder Ventileinrichtungen 340 nur mit Ventilports für Einkreisbrenner oder auch beliebige Kombinationen möglich.

In Fig. 11 ist eine Rotorscheibe 11 vor zwei Gasausgangsöffnungen 26 und 226 für einen Zweikreisbrenner im Detail dargestellt. Die Öffnung 12 der Rotorscheibe 11 überdeckt die Ausgangsöffnung 26 bzw. 226 so, dass der Gasdurchfluss für die Gaszufuhr beider Anschlüsse des Zweikreisbrenners eingestellt werden kann.

Vorteilhaft ist die Ventileinrichtung 40 bzw. 340 so ausgebildet, dass an ihrem Gaseingang 48 ein Hauptabsperrventil und/oder ein Filterelement angeschlossen oder integriert werden kann.

Eine besonders bauraumsparende Ausführung ergibt sich, wenn der Aktuator 47 des Absperrventils und der Aktuator 21 des Rotorscheibenventils an gegenüberliegenden Seiten des Ventileinrichtungskörpers 41 bzw. 341 angeordnet werden. Besonders vorteilhaft ist die Anordnung der Gasausgänge 45 oberhalb eines der Aktuatoren 47 oder 21, vorzugsweise oberhalb des Aktuators 47 des Absperrventils.

## Patentansprüche

1. Ventileinrichtung (40, 340) für elektronisch gesteuerte Gasgeräte mit mindestens zwei Gasbrennern, wobei die Ventileinrichtung (40, 340) einen Ventileinrichtungskörper (41, 341) und mehrere Ventilports aufweist, die über eine Gaszuleitung mit Gas versorgt sind, wobei jeder Ventilport ein Absperrventil (46), ein Rotorscheibenventil (20, 220) und einen Gasausgang (45, 345) zum Anschluss eines Gasbrenners aufweist, wobei
- die Ventileinrichtung (40, 340) eine gemeinsame Gaszuleitung (42, 342) für die Ventilports der Ventileinrichtung (40, 340) zur Gasversorgung aufweist,
- die Ventilports im weiteren Verlauf des Gasflusses mittels einer im Ventileinrichtungskörper angeordneten Gasverteilleitung (42, 342) angeschlossen sind,
- das Rotorscheibenventil (20, 220) im Ventilport eine um eine Drehachse senkrecht zur Scheibenfläche drehbar gelagerte Rotorscheibe (11, 111) aufweist, und
- das Rotorscheibenventil (20, 220) zur Einstellung eines definierten Gasdurchflusses mittels eines Aktuators (21) angetrieben ist,
- die Ventileinrichtung (340) einen mehrteiligen Ventileinrichtungskörper (341) aufweist und aus mehreren Einzelmodulen zusammengesetzt ist,
- jedes Einzelmodul einen Teil des Ventileinrichtungskörpers (341) mit einem Teil der Gasverteilleitung (342) und einen Ventilport aufweist.

2. Ventileinrichtung (40, 340) nach Anspruch 1, **dadurch gekennzeichnet, dass** das Rotorscheibenventil (20, 220) eine Rotorscheibe (11) aufweist, die mittels einer Nabe (17) auf der Achse (23) gelagert ist und durch ein Ritzel (25), welches auf der Antriebswelle zur Einstellung eines definierten Gasdurchflusses des Rotorscheibenventils (20) gelagert ist, antreibbar ist, wobei
- die Rotorscheibe (11) für eine drehbare Lagerung um eine Drehachse senkrecht zur Scheibenfläche auf einer Achse (23) bzw. Antriebswelle (223) ausgebildet ist,
- die Rotorscheibe (11) mit einer oder mehreren Öffnungen (12, 18) versehen ist und
- ein Rand der Rotorscheibe (11) zumindest teilweise als Zahnkranz (14) ausgebildet ist.

3. Ventileinrichtung (40, 340) nach Anspruch 1, **dadurch gekennzeichnet, dass** das Rotorscheibenventil (20, 220) eine Rotorscheibe (11) aufweist, die mittels einer Nabe (17) auf der Achse (23) gelagert ist und durch ein Ritzel (25), welches auf der Antriebswelle zur Einstellung eines definierten Gasdurchflusses des Rotorscheibenventils (20) gelagert ist, antreibbar ist, wobei
- die Rotorscheibe (11,111) für eine drehbare Lagerung um eine Drehachse senkrecht zur Scheibenfläche auf der Achse (23) bzw. Antriebswelle (223) ausgebildet ist,
- die Rotorscheibe (11,111) mit einer oder mehreren Öffnungen (12, 112, 18, 118) versehen ist und
- die Rotorscheibe (11,111) ein Stanzteil aus dünnem Blech ist.

4. Ventileinrichtung (40, 340) nach Anspruch 2 oder 3, **dadurch gekennzeichnet, dass** die Rotorscheibe (11, 111) neben den Öffnungen (12, 112, 18, 118) auch einen Bereich ohne Öffnungen (15, 115) für eine Geschlossenstellung aufweist.

5. Ventileinrichtung (40, 340) nach einem der Ansprüche 2 bis 4, **dadurch gekennzeichnet, dass** die Rotorscheibe (111) mittels der Nabe (17) auf der Antriebswelle (223) zur Einstellung eines definierten Gasdurchflusses des Rotorscheibenventils (220) gelagert ist und die Rotorscheibe (111) mit der Antriebswelle (223) so verbunden ist, dass eine Winkelposition der Rotorscheibe (111) einer Winkelposition der Antriebswelle (223) entspricht.

6. Ventileinrichtung (40, 340) nach einem der Ansprüche 2 bis 5, **dadurch gekennzeichnet, dass** das Rotorscheibenventil (20, 220) mindestens ein Positionierungselement (28) aufweist, und die Rotorscheibe (11, 111) derart ausgebildet ist, dass die Rotorscheibe (11, 111) bei entsprechender Anordnung im Rotorscheibenventil (20, 220) am Positionierungselement (28) mindestens eine definierte Winkelposition mittels Drehanschlag, bevorzugt eine Endposition, einnimmt, wobei die definierte Winkelposition durch das Positionierungselement (28) mechanisch bestimmt ist, wobei vorzugsweise der definierte Drehanschlag mittels einer speziellen Aussenkontur (16, 116) der Rotorscheibe (11, 111) in Zusammenwirkung mit einem Stift als Positionierungselement (28) ausgebildet ist.

7. Ventileinrichtung (40, 340) nach einem der Ansprüche 2 bis 6, **dadurch gekennzeichnet, dass** die Öffnungen (12, 112, 18, 118) der Rotorscheibe (11, 111) in Abhängigkeit von der Winkelposition und ihrer Geometrie eine Ausgangsöffnung (26, 226) des Rotorscheibenventils (20,220) mit einem Überdeckungsgrad von 0 bis 100% derart überlappen, dass für jede Rotorscheibenwinkelposition entweder ein definierter Strömungsquerschnitt oder die Geschlossenstellung einstellbar ist.

8. Ventileinrichtung (40, 340) nach einem der Ansprüche 2 bis 7, **dadurch gekennzeichnet, dass** in einem Kontaktbereich zwischen Rotorscheibe (11, 111) und einem an die Ausgangsöffnung (26, 226) angrenzenden Ausgangsbereich ein Dichtelement (27), vorzugsweise eine Ringdichtung, angeordnet ist, wobei insbesondere das Dichtelement (27) im Ausgangsbereich angeordnet ist.

9. Ventileinrichtung (40, 340) nach einem der vorhergehenden Ansprüche, **dadurch gekennzeichnet, dass** der Aktuator (21) zum Antrieb des Rotorscheibenventils (20, 220) ein Schrittmotor ist.

10. Ventileinrichtung (340) nach einem der vorhergehenden Ansprüche, **dadurch gekennzeichnet, dass** eine elektronische Ansteuerung des Aktuators des Rotorscheibenventils (20, 220) eine Endlagenerkennung aufweist.

11. Ventileinrichtung (40, 340) nach einem der vorhergehenden Ansprüche, **dadurch gekennzeichnet, dass** der Aktuator (47) eines Absperrventils (46) eines Ventilports und der Aktuator (21) des Rotorscheibenventils (20, 220) eines Ventilports an gegenüberliegenden Seiten des Ventileinrichtungskörpers (41, 341) angeordnet sind und die Gasausgänge (45, 345) eines Ventilports oberhalb angeordnet sind, vorzugsweise oberhalb des Aktuators (47) des Absperrventils (46).

12. Ventileinrichtung (40, 340) nach einem der vorhergehenden Ansprüche, **dadurch gekennzeichnet, dass** eines der beiden Enden (48, 49) der Gasverteilleitung (42, 342) einen gemeinsamen Gaseingang (48) der Ventileinrichtung (40, 340) bildet und an dem anderen Ende (49) der Gasverteilleitung (42, 342) ein Verschluss oder ein Anschlusselement, bevorzugt eine weiterführende Gasleitung, vorgesehen ist.

13. Ventileinrichtung (40, 340) nach einem der vorhergehenden Ansprüche, **dadurch gekennzeichnet, dass** in einem oder mehreren Ventilports der Ventileinrichtung (40, 340) das bzw. die Rotorscheibenventile (20, 220) mit mehr als einer Ausgangsöffnung (26, 226) versehen sind, und jede Ausgangsöffnung (26, 226) einen separaten Gasausgang (45, 345) aus der Ventileinrichtung (40, 340) aufweist.

## Claims

1. A valve device (40, 340) for electronically controlled gas appliances with at least two gas burners, wherein the valve device (40, 340) comprises a valve device body (41, 341) and a plurality of valve ports which are supplied with gas via a gas supply line, wherein each valve port includes a shut-off valve (46), a rotor disk valve (20, 220), and a gas outlet (45, 345) for connecting a gas burner, wherein
- the valve device (40, 340) has a common gas supply line (42, 342) for the valve ports of the valve device (40, 340) for gas supply,
- the valve ports are connected by means of a gas distribution line (42, 342) disposed in the valve device body in the further progress of the gas flow,
- the rotor disk valve (20, 220) in the valve port includes a rotor disk (11, 111) supported to be rotating about a rotation axis perpendicular to a disk surface, and
- the rotor disk valve (20, 220) is driven for setting a defined gas flow rate by means of an actuator (21),
- the valve device (340) has a multi-part valve device body (341) and is composed of a plurality of individual modules,
- each module includes a part of the valve device body (341) with a part of the gas distribution line (342) and a valve port.

2. The valve device (40, 340) according to claim 1, **characterized in that** the rotor disk valve (20, 220) comprises a rotor disk (11), supported by means of a hub (17) on the axis (23) and drivable by a pinion (25), which pinion is supported on the drive shaft for setting a defined gas flow rate of the rotor disk valve (20), wherein
- the rotor disk (11) is arranged for rotating support around a rotation axis perpendicular to a disk surface on an axis (23) or drive shaft (223),
- the rotor disk (11) is provided with one or more apertures (12, 18), and
- a rim of the rotor disk (11) is at least partially formed as a geared rim (14).

3. The valve device (40, 340) according to claim 1, **characterized in that** the rotor disk valve (20, 220) includes a rotor disk (11), which disk is supported by means of a hub (17) on the axis (23) and drivable by a pinion (25), which pinion is supported on the drive shaft for adjusting a defined gas flow rate of the rotor disk valve (20), wherein
- the rotor disk (11, 111) is arranged for rotating support around a rotation axis perpendicular to a disk surface on the axis (23) or drive shaft (223),
- the rotor disk (11, 111) is provided with one or more apertures (12, 112, 18, 118), and
- the rotor disk (11, 111) is a blanked part made of thin sheet metal.

4. The valve device (40, 340) according to claim 2 or 3, **characterized in that** the rotor disk (11, 111) has a zone without apertures (15, 115), in addition to the apertures (12, 112, 18, 118), for a closed position.

5. The valve device (40, 340) according to any of the claims 2 to 4, **characterized in that** the rotor disk (111) is supported by means of the hub (17) on the drive shaft (223) for setting a defined gas flow rate of the rotor disk valve (220), and the rotor disk (111) is connected to the drive shaft (223) such that an angular position of the rotor disk (111) is corresponding to an angular position of the drive shaft (223).

6. The valve device (40, 340) according to any of the claims 2 to 5, **characterized in that** the rotor disk valve (20, 220) has at least one positioning element (28), and the rotor disk (11, 111) is configured such that the rotor disk (11, 111) assumes, upon corresponding arrangement in the rotor disk valve (20, 220), on the positioning element (28) at least one defined angular position by means of a rotation stop, preferably an end position, wherein the defined angular position is mechanically predetermined by the positioning element (28), wherein preferably the defined rotation stop is formed by means of a specific outer contour (16, 116) of the rotor disk (11, 111) in cooperation with a pin as a positioning element (28).

7. The valve device (40, 340) according to any of the claims 2 to 6, **characterized in that** the apertures (12, 112, 18, 118) of the rotor disk (11, 111), as a function of the angular position and their geometry, are overlapping an outlet aperture (26, 226) of the rotor disk valve (20, 220) with a covering degree from 0 to 100 % in such a way that for each rotor disk angular position either a defined flow cross section or the closed position are adjustable.

8. The valve device (40, 340) according to any of the claims 2 to 7, **characterized in that** in a contact zone between rotor disk (11, 111) and an outlet zone adjacent to the outlet aperture (26, 226) is disposed a sealing element (27), preferably a ring seal, wherein in particular the sealing element (27) is disposed in the outlet zone.

9. The valve device (40, 340) according to any of the preceding claims, **characterized in that** the actuator (21) for driving the rotor disk valve (20, 220) is a step motor.

10. The valve device (340) according to any of the preceding claims, **characterized in that** an electronic control of the actuator of the rotor disk valve (20, 220) includes an end position detection.

11. The valve device (40, 340) according to any of the preceding claims, **characterized in that** the actuator (47) of a shut-off valve (46) of a valve port and the actuator (21) of the rotor disk valve (20, 220) of a valve port are disposed on opposite sides of the valve device body (41, 341) and the gas outlets (45, 345) of a valve port are disposed upstream, preferably upstream of the actuator (47) of the shut-off valve (46).

12. The valve device (40, 340) according to any of the preceding claims, **characterized in that** one of the two ends (48, 49) of the gas distribution line (42, 342) forms a common gas input (48) of the valve device (40, 340), and at the other end (49) of the gas distribution line (42, 342) is provided a closure or a connection element, preferably a continuing gas line.

13. The valve device (40, 340) according to any of the preceding claims, **characterized in that** in one or more valve ports of the valve device (40, 340) the one or more rotor disk valves (20, 220) are provided with more than one outlet aperture (26, 226), and each outlet aperture (26, 226) has a separate gas outlet (45, 345) from the valve device (40, 340).

## Revendications

1. Dispositif de vanne (40, 340) pour des appareils à gaz à commande électronique avec au moins deux brûleurs à gaz, dans lequel le dispositif de vanne (40, 340) présente un corps de dispositif de vanne (41, 341) et plusieurs orifices de vanne, qui sont alimentés en gaz par une conduite d'arrivée de gaz, dans lequel chaque orifice de vanne comporte une vanne d'arrêt (46), une vanne à disque rotorique (20, 220) et une sortie de gaz (45, 345) pour le raccordement d'un brûleur à gaz, dans lequel
- le dispositif de vanne (40, 340) présente une conduite d'arrivée de gaz commune (42, 342) pour les orifices de vanne du dispositif de vanne (40, 340) en vue de l'alimentation en gaz,
- les orifices de vanne sont raccordés, dans le parcours ultérieur du flux de gaz, au moyen d'une conduite de distribution de gaz (42, 342) disposée dans le corps de dispositif de vanne,
- la vanne à disque rotorique (20, 220) présente dans l'orifice de vanne un disque rotorique (11, 111) monté de façon rotative autour d'un axe de rotation perpendiculaire à la surface du disque, et
- la vanne à disque rotorique (20, 220) est entraînée au moyen d'un actionneur (21) pour le réglage d'un débit de gaz défini,
- le dispositif de vanne (340) présente un corps de dispositif de vanne (341) en plusieurs parties et est composé de plusieurs modules individuels,
- chaque module individuel présente une partie du corps de dispositif de vanne (341) avec une partie de la conduite d'arrivée de gaz (342) et un orifice de vanne.

2. Dispositif de vanne (40, 340) selon la revendication 1, **caractérisé en ce que** la vanne à disque rotorique (20, 220) comporte un disque rotorique (11), qui est monté sur l'axe (23) au moyen d'un moyeu (17) et qui peut être entraîné par un pignon (25), qui est monté sur l'arbre d'entraînement pour le réglage d'un débit de gaz défini de la vanne à disque rotorique (20), dans lequel
- le disque rotorique (11) est conçu en vue d'un montage rotatif autour d'un axe de rotation perpendiculaire à la surface du disque, sur un axe (23) ou un arbre d'entraînement (223),
- le disque rotorique (11) est doté d'une ou de plusieurs ouvertures (12, 18), et
- un bord du disque rotorique (11) est réalisé au moins en partie sous forme de couronne dentée (14).

3. Dispositif de vanne (40, 340) selon la revendication 1, **caractérisé en ce que** la vanne à disque rotorique (20, 220) comporte un disque rotorique (11), qui est monté sur l'axe (23) au moyen d'un moyeu (17) et qui peut être entraîné par un pignon (25), qui est monté sur l'arbre d'entraînement pour le réglage d'un débit de gaz défini de la vanne à disque rotorique (20), dans lequel
- le disque rotorique (11, 111) est conçu en vue d'un montage rotatif autour d'un axe de rotation perpendiculaire à la surface du disque, sur l'axe (23) ou l'arbre d'entraînement (223),
- le disque rotorique (11, 111) est doté d'une ou de plusieurs ouvertures (12, 112, 18, 118), et
- le disque rotorique (11, 111) est une pièce emboutie en tôle mince.

4. Dispositif de vanne (40, 340) selon la revendication 2 ou 3, **caractérisé en ce que** le disque rotorique (11, 111) présente également, en plus des ouvertures (12, 112, 18, 118), une zone sans ouvertures (15, 115) pour une position fermée.

5. Dispositif de vanne (40, 340) selon l'une quelconque des revendications 2 à 4, **caractérisé en ce que** le disque rotorique (111) est monté sur l'arbre d'entraînement (223) au moyen du moyeu (17) pour le réglage d'un débit de gaz défini de la vanne à disque rotorique (220) et le disque rotorique (111) est assemblé à l'arbre d'entraînement (223), de telle manière qu'une position angulaire du disque rotorique (111) corresponde à une position angulaire de l'arbre d'entraînement (223).

6. Dispositif de vanne (40, 340) selon l'une quelconque des revendications 2 à 5, **caractérisé en ce que** la vanne à disque rotorique (20, 220) présente au moins un élément de positionnement (28), et le disque rotorique (11, 111) est réalisé de telle manière que le disque rotorique (11, 111) occupe, pour un agencement correspondant dans la vanne à disque rotorique (20, 220), sur l'élément de positionnement (28) au moins une position angulaire définie au moyen d'une butée rotative, de préférence une position terminale, dans lequel la position angulaire définie est déterminée mécaniquement par l'élément de positionnement (28), dans lequel la butée rotative définie est de préférence réalisée au moyen d'un contour extérieur spécial (16, 116) du disque rotorique (11, 111) en coopération avec une broche comme élément de positionnement (28).

7. Dispositif de vanne (40, 340) selon l'une quelconque des revendications 2 à 6, **caractérisé en ce que** les ouvertures (12, 112, 18, 118) du disque rotorique (11, 111) recouvrent en fonction de la position angulaire et de leur géométrie une ouverture de sortie (26, 226) de la vanne à disque rotorique (20, 220) avec un degré de recouvrement de 0 à 100 %, de telle manière que, pour chaque position angulaire du disque rotorique, on puisse régler soit une section transversale d'écoulement définie soit la position fermée.

8. Dispositif de vanne (40, 340) selon l'une quelconque des revendications 2 à 7, **caractérisé en ce qu'**un élément d'étanchéité (27), de préférence un joint torique, est disposé dans une zone de contact entre le disque rotorique (11, 111) et une zone de sortie adjacente à l'ouverture de sortie (26, 226), dans lequel l'élément d'étanchéité (27) est disposé en particulier dans la zone de sortie.

9. Dispositif de vanne (40, 340) selon l'une quelconque des revendications précédentes, **caractérisé en ce que** l'actionneur (21) pour l'entraînement de la vanne à disque rotorique (20, 220) est un moteur pas à pas.

10. Dispositif de vanne (40, 340) selon l'une quelconque des revendications précédentes, **caractérisé en ce qu'**une commande électronique de l'actionneur de la vanne à disque rotorique (20, 220) présente une reconnaissance de position terminale.

11. Dispositif de vanne (40, 340) selon l'une quelconque des revendications précédentes, **caractérisé en ce que** l'actionneur (47) d'une vanne d'arrêt (46) d'un orifice de vanne et l'actionneur (21) de la vanne à disque rotorique (20, 220) d'un orifice de vanne sont disposés sur des côtés opposés du corps de dispositif de vanne (41, 341) et les sorties de gaz (45, 345) d'un orifice de vanne sont disposées au-dessus, de préférence au-dessus de l'actionneur (47) de la vanne d'arrêt (46).

12. Dispositif de vanne (40, 340) selon l'une quelconque des revendications précédentes, **caractérisé en ce qu'**une des deux extrémités (48, 49) de la conduite de distribution de gaz (42, 342) forme une entrée de gaz commune (48) du dispositif de vanne (40, 340), et il est prévu une fermeture ou un élément de raccordement, de préférence une conduite de gaz prolongée, à l'autre extrémité (49) de la conduite de distribution de gaz (42, 342).

13. Dispositif de vanne (40, 340) selon l'une quelconque des revendications précédentes, **caractérisé en ce que** la ou les vanne (s) à disque rotorique (20, 220) est/sont dotée(s) de plus d'une ouverture de sortie (26, 226) dans un ou plusieurs orifice(s) de vanne du dispositif de vanne (40, 340), et chaque ouverture de sortie (26, 226) présente une sortie de gaz séparée (45, 345) hors du dispositif de vanne (40, 340).
